(19) Europäisches Patentamt
European Patent Office
Office européen des brevets

(11) Numéro de publication: **0 031 271**
**B1**

(12) **FASCICULE DE BREVET EUROPEEN**

(45) Date de publication du fascicule du brevet: **08.05.85**

(51) Int. Cl.⁴: **C 01 B 33/193,** C 09 C 1/30

(21) Numéro de dépôt: **80401750.7**

(22) Date de dépôt: **08.12.80**

(54) ***Silice de précipitation, notamment utilisable comme charge renforçante.***

(30) Priorité: **20.12.79 FR 7931217**

(43) Date de publication de la demande:
**01.07.81 Bulletin 81/26**

(45) Mention de la délivrance du brevet:
**08.05.85 Bulletin 85/19**

(84) Etats contractants désignés:
**BE DE FR GB IT NL**

(56) Documents cités:
**FR-A-1 453 198**
**FR-A-1 483 791**
**FR-A-1 530 836**
**FR-A-2 218 285**
**FR-A-2 353 486**
**GB-A- 883 863**

**Le dossier contient des informations techniques présentées postérieurement au dépôt de la demande et ne figurant pas dans le présent fascicule.**

(73) Titulaire: **RHONE-POULENC CHIMIE DE BASE**
**25, quai Paul Doumer**
**F-92408 Courbevoie (FR)**

(72) Inventeur: **Lagarde, Robert**
**62, rue de l'Oasis**
**F-69320 Feyzin (FR)**
Inventeur: **Machurat, Jean**
**8, rue Descartes**
**F-69250 Neuville-sur-Saône (FR)**
Inventeur: **Morawski, Jean-Claude**
**10, rue des Primevères**
**F-69680 Chassieu (FR)**
Inventeur: **Vrisakis, Georges**
**14, rue Galliéni**
**F-69660 Collonges au Mont d'Or (FR)**

(74) Mandataire: **Martin, Henri et al**
**RHONE-POULENC RECHERCHES Service Brevets Chimie et Polymères 25, quai Paul Doumer**
**F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 031 271 B1

## Description

La présente invention a pour objet une silice de précipitation hydrophile notamment utilisable comme charge renforçante dans les compositions organo-polysiloxaniques durcissables et en élastomères.

On sait depuis longtemps préparer des silices de précipitation par action d'un agent d'acidification, et une solution aqueuse de silicate alcalin, mais on s'est vite aperçu que malgré l'apparente simplicité du procédé d'obtention des silices, les silices obtenues n'offraient pas les propriétés intéressantes suffisantes en élastomères.

Et en dépit des efforts entrepris pour mettre en évidence le facteur déterminant, surface spécifique BET, facteur de rugosité ou de coalescence, prise d'huile, indice de structure, les propriétés des charges ainsi obtenues restaient bien inférieures à celles conférées par les silices de combustion, lesquelles malheureusement s'avèrent d'un prix beaucoup plus élevé.

Depuis de nombreuses années, pour élever la capacité des silices a renforcement des élastomères, on a mis au point divers procédés de préparation de silices de précipitation de plus en plus complexes et sophistiqués et selon lesquels on règle durant la préparation et de manière précise la température, les concentrations en réactifs (silicate, acide), les vitesses de coulée des réactifs, les séquences d'additions successives de réactifs, la valeur du pH...(brevet français 1 352 354; brevets américains 3 954 944 et 4 127 641...).

On a cherché par ailleurs à améliorer les qualités d'agent de renforcement des silices de précipitation pour les applications silicones en rendant les silices hydrophobes par un traitement de surface approprié (emploi par exemple de silane, de silazane...) Des silices hydrophiles rendues hydrophobes par un tel traitement et utilisables pour les applications silicones sont par exemple décrites dans la demande de FR—A—2 356 596.

Enfin, et tout récemment on a décrit une silice de précipitation très améliorée mais conférrant cependant aux élastomères organopolysiloxaniques des propriétés renforçantes plus faibles que celles conférrées par les silices de combustion (conférence internationale du caoutchouc tenue à KIEV du 10 au 14 octobre 1978).

Or, on a revendiqué des silices à faible surface CTAB (<125 $m^2/g$) dans l'application caoutchouc, dans le FR—A—2 353 486.

Par ailleurs, le FR—A—1 483 791 indique l'utilisation de surface spécifique BET élevée, de même que le FR—A—2 218 285.

Enfin, le FR—A—1 530 836 montre qu'il est conventionnel d'utiliser des silices de précipitation de 0,2 à 5 µm.

On a maintenant trouvé et c'est ce qui fait l'objet de la présente invention une nouvelle silice de précipitation caractérisée par le fait qu'elle présente les caractéristiques suivantes:

— surface BET 190—340 $m^2/g$
— surface CTAB 180—280 $m^2/g$

— rapport $\dfrac{\text{surface BET}}{\text{surface CTAB}}$ = 0,9 à 1,2

— teneur en sodium résiduel <500 ppm

Dans le cadre de la présente demande, le tamis ppm signifie partie en poids par million.

— pH= 3,5—6,0
— un volume spécifique $V_o \geq 4{,}2$ $cm^3/g$

et de préférence une taille des particules estimées au refus au tamis de 45 µm <0,05%.

Selon une forme particulière la silice selon l'invention est une silice de caractéristiques suivantes:

surface BET 200 à 250 $m^2/g$
surface CTAB 190 à 240 $m^2/g$

rapport $\dfrac{\text{surface BET}}{\text{surface CTAB}}$ = 0,9 à 1,2

teneur en sodium résiduel <500 ppm
pH 4,5—5,5
volume spécifique $V_o \geq 4{,}2$ $cm^3/g$

taille des particules estimée par refus au tamis de 45 µm <0,05%

Les valeurs des diverses caractéristiques servant à définir les silices de précipitation sont déterminées de la manière suivante:

La surface spécifique BET est déterminée selon la méthode de Brunauer—Emmet—Teller décrite dans "Journal of the American Chemical Society vol. 60 p. 309 (1938).

— La surface CTAB est déterminée par adsorption de bromure de cétyl-triméthylammonium à pH 9 selon la méthode de Jay—Janzen—Kraus (Rubber Chemistry and Technology *44* (1971) p. 1287—1296).
— Le volume spécifique $V_0$ exprimé en $cm^3/g$ est déterminé de la manière suivante:

Dans une matrice de diamètre intérieur égal à 25 mm et de hauteur égale à 80 mm on ajoute 3 g de silice puis disposé au-dessus un piston sur lequel on ajoute un poids déterminé de manière à exercer sur la silice une pression de 4 $kg/cm^2$. Le volume spécifique de la silice est alors mesuré. C'est le volume "$V_0$" exprimé en $cm^3/g$ (volume initial).

De la même manière, on exprime le $V_{600}$ en exerçant une pression de 600 $kg/cm^2$. Selon une variante de cette méthode, on sèche 1 heure 1/2 à 190°C avant d'effectuer la mesure.

— La teneur en sodium résiduel correspond au sodium total. Cette teneur est mesurée par spectroémission de flämme après dissolution de la silice par l'acide fluorhydrique.
— Le pH est mesuré sur une suspension de silice à 5% dans l'eau.

La nature des compositions organosiliciques selon l'invention et pouvant après vulcanisation être renforcées par les silices précédemment décrites n'est pas critique. De manière générale, les compositions organosiliciques peuvent être solides, gommeuses, pateuses ou liquides.

Dans ces compositions, le polymère organosilicique mis en oeuvre et vulcanisable est tel que désignant par R les radicaux de nature hydrocarbonée liés aux atomes de silicium, le rapport entre le nombre total de radicaux R et le nombre total d'atomes de silicium, est compris entre 0,5 et 3. Dans la constitution de polymère organosilicique, les autres valences disponibles du silicium sont reliées à des hétéro-atomes tels que l'oxygène ou l'azote, ou bien à des radicaux hydrocarbonés multivalents.

Préférentiellement les compositions organosiliciques chargées selon l'invention sont des compositions organopolysiloxaniques dans lesquelles l'organopolysiloxane peut être linéaire ramifié ou réticulé, et éventuellement comporter en plus des radicaux hydrocarbonés, des groupements réactifs comme par exemple des groupements hydroxyles, des groupements hydrolysables, des groupements alkényle, des atomes d'hydrogène...

Plus précisément les organopolysiloxanes constituants principaux des compositions selon l'invention sont constitués de motifs siloxaniques de formule générale:

$$R_n\,SiO_{\frac{4-n}{2}} \qquad (I)$$

éventuellement associés à des motifs siloxaniques de formule:

$$Z_x\,R_y\,SiO_{\frac{4-x-y}{2}} \qquad (II)$$

Dans ces formules les divers symboles ont la signification suivante:

— R représenté un groupement de nature hydrocarbonée non hydrolysable, ce radical pouvant être:
  — un radical alcoyle ou halogènoalkyle ayant de 1 à 5 atomes de carbone et comportant de 1 à atomes de chlore et/ou de fluor.
  — des radicaux cycloalcoyles et halogènocycloalcoyles ayant de 3 à 8 atomes de carbone et contenant de 1 à 4 atomes de chlore et/ou de fluor.
  — des radicaux aryles, alcoylaryles et halogènoaryles ayant de 6 à 8 atomes de carbone et contenant de 1 à 4 atomes de chlore et/ou de fluor.
  — des radicaux cyanoalcoyles ayant de 3 à 4 atomes de carbone.
— Z=un atome d'hydrogène, un groupement alkenyle, un groupement hydroxyle, un atome hydrolysable, un groupement hydrolysable.
— n=un nombre entier égal à 0, 1, 2 ou 3
— x=un nombre entier égal à 0, 1, 2 ou 3
— y=un nombre entier inférieur ou égal à 2.

A titre illustratif, on peut citer parmi les radicaux organiques R, directement liés aux atomes de silicium:

Les groupes méthyle: éthyle; propyle; isopropyle; butyle; isobutyle; α-pentyle; t-butyle; chloro-

méthyle; dichlorométhyle; α-chloroéthyle; α,β-dichloroéthyle; fluorométhyle; difluorométhyle; α,β-difluoroéthyle; trifluoro-3,3,3 propyle; trifluoro cyclopropyle; trifluoro-4,4,4 butyle; heptafluoro-3,3,4 4,5,5 pentyle; β-cyanoéthyle; γ-cyanopropyle: phényle; p-chlorophényle; m-chlorophényle; dichloro-3,5 phényle; trichlorophényle; tétrachlorophényle; o-, p-, ou m-tolyle; α,α,α-trifluorotolyle; xylyles comme diméthyl-2,3 phényle; diméthyl-3,4 phényle.

Préférentiellement les radicaux organiques liés aux atomes de silicium sont des radicaux méthyle, phényle, vinyle, ces radicaux pouvant être éventuellement halogénés ou bien encore des radicaux cyanoalkyle.

Les symboles Z peuvent être des atomes d'hydrogène, des atomes de chlore, des groupements vinyles, des groupements hydroxyles ou des groupements hydrolysables tels que: amino, amido, aminoxy, oxime, alcoxy, alcoxyalcoxy, alkenyloxy, acyloxy...

La nature de l'organopolysiloxane et donc les rapports entre les motifs siloxaniques (I) et (II) et la répartition de ceux-ci est comme on le sait choisie en fonction de l'application envisagée et en fonction du traitement de vulcanisation qui sera effectué sur la composition.

Il peut ainsi s'agir de compositions vulcanisables à température élevée sous l'action de peroxydes organiques tels que le peroxyde de dichloro-2,4 benzoyle, le peroxyde de benzoyle, le perbenzoate de t-butyle, le peroxyde de cumyle, le peroxyde de di-t-butyle...

L'organopolysiloxane entrant dans de telles compositions est alors constitué essentiellement de motifs siloxaniques (I) et ne contient pas de groupes ou d'atomes hydrolysables.

Les polyméthylpolysiloxanes terminés par des groupements triméthylsilyles représentent un exemple particulièrement important de cette catégorie sur le plan industriel.

La vulcanisation peut être également effectuée à température ambiante ou à température modérée par création de réticulations entre des groupements vinylsilylés et des groupements hydrogénosilylés, la réaction d'hydrosilylation étant effectuée en présence de catalyseurs tels que les dérivés du platine, les organopolysiloxanes mis en oeuvre ne contiennent alors pas d'atomes ou de groupements hydrolysables.

La vulcanisation peut être effectuée sous l'action de l'humidité. Les organopolysiloxanes contenus dans les compositions de ce type contiennent des atomes ou des groupements hydrolysables tels que précédemment définis. Les motifs siloxaniques (II) contenant de tels groupements représentent au plus 15% en poids de la masse totale de l'organopolysiloxane mis en oeuvre. Les compositions organopolysiloxaniques de ce type contiennent généralement des catalyseurs tels que les sels d'étain.

La vulcanisation peut enfin être effectuée en présence d'agents de réticulation. Les organopolysiloxanes entrant dans ces compositions sont en général des polysiloxanes linéaires ramifiés ou réticulés constitués de motifs (I) et (II) dans lesquels Z est un groupement hydroxyle et où x est au moins égal à 1. L'agent de réticulation peut être un silane polyfonctionnel tels que le méthyltriacétoxysilane, l'isopropyltriacetoxysilane, le vinyltriacétoxysilane, le méthyltris(diéthylaminoxy)silane... Divers autres composés tels que les silicates peuvent être utilisés comme agents de réticulation.

Les silices de précipitation selon l'invention et telles que précédemment définies par leurs caractéristiques physico-chimiques sont de manière générale non microporeuses, de grande surface et de haute finesse de particules.

Les silices selon l'invention peuvent être élaborées de diverses manières en mettant en oeuvre les techniques de préparation connues avec addition initiale de tout le silicate, addition simultanée de silicate et d'acide, traitement de post-addition... et ceci à condition de bien choisir les valeurs des divers paramètres interdépendants de telle manière que l'on parvienne aux résultats désires, la variation de l'un des paramètres étant compensée par le choix des valeurs des autres paramètres.

On peut par exemple introduire progressivement dans une solution aqueuse de silicate alcalin de l'anhydride carbonique ou une solution aqueuse d'acide minéral fort jusqu'à la formation du gel puis précipitation de la silice. L'addition de la solution d'acide est en général effectuée en plusieurs phases et préférentiellement la coulée de l'acide est interrompue dès l'apparition de l'opalescence traduisant une montée rapide en viscosité, la coulée de l'acide n'est reprise qu'après rupture du gel, de manière à amener la valeur du pH entre 9 et 7. Durant cette dernière coulée d'acide on élève rapidement la température et la maintient proche de 100°C au moins durant 20 minutes et de préférence pendant 30 minutes. Sans être lié par les explications qui vont suivre on peut estimer que le traitement de chauffage précédent et dans cette gamme de pH permet le bouchage des micropores éventuellement présents.

On redémarre ensuite la coulée de l'acide jusqu'à amener le pH du milieu à une valeur comprise entre 3,5 et 5,5, filtre la silice précipitée, et la lave à l'eau pure (eau désionisée par exemple). Toute eau dont la conductivité est inférieure à $3 \times 10^{-4} \Omega/cm^2/cm$ peut être utilisée.

Préférentiellement le lavage est successivement réalisé au moyen d'eau pure légèrement acidifiée à pH 5—4 puis d'eau pure. Après lavage on sèche et micronise la silice selon les techniques usuelles. Le séchage est par exemple effectué dans un appareil à courants tourbillonnaires tel que décrit dans la demande de brevet français n° 2 257 326, le temps de passage y est inférieur à la minute.

La micronisation est réalisée au moyen d'appareil du type Jet O-MIZER et autres décrits dans Chemical Engineers, Handbook de JH PERRY 5ème édition partie 8/43. Les conditions du séchage et de la micronisation sont adaptées de manière à obtenir et selon la technique usuelle de l'homme de l'art, des valeurs convenables en ce qui concerne les paramètres $V_o$, teneur en humidité...

En règle générale, dans le cadre du procédé qui vient d'être décrit les solutions aqueuses de silicates

contiennent de 50 à 120 g/l en équivalent pondéral de dioxyde de silicium, le rapport molaire $SiO_2$/oxyde alcalin ($Na_2O$...) est compris entre 2,5 et 4 et les solutions acides peuvent être utilisées diluées ou concentrées.

La température de neutralisation de la solution aqueuse de silicate est initialement comprise entre 50°C et 95°C avant le chauffage ultérieur de bouchage des micropores.

La température de neutralisation doit être choisie d'autant plus élevée que le milieu où va se former le gel puis le précipité de silice, est plus dilué. A même dilution, l'élévation de température permet en effet de diminuer les surfaces des silices de précipitation; si le milieu est plus concentré on opérera alors dans des zones plus basses de températures (50 à 70°C par exemple).

Par ailleurs, selon des variantes préférentielles on peut initialement ajouter dans la solution aqueuse de silicate un agent sequestrant, permettant de complexer au moins en partie et préférentiellement en totalité les traces d'impuretés métalliques (en particulier métaux alcalino-terreux tels que le calcium et le magnésium), qui sont en pratique toujours présentes dans le silicate à très faible teneur. Parmi les complexants utilisables on peut citer: l'acide éthylènediamine tétracétique (EDTA), le nitrilotriacétate de soude (NTA), le diéthylènetriaminopentacétate de soude (DTPA), le tripolyphosphate de sodium (STPP)...

Selon une autre variante préférentielle, on peut diluer à l'eau le milieu de formation de la silice après rupture du gel d'acide polysilicique. Cette dilution est bénéfique puisqu'elle permet d'améliorer la lavabilité du gâteau de silice. Par ailleurs, selon une autre variante, il est également possible de mettre en oeuvre une technique dite "neutralisation avec recirculation" et consistant à neutraliser par l'acide, la solution aqueuse de silicate alcalin dans un réacteur de faible capacité (par rapport à la quantité globale de solution aqueuse de silicate) en y faisant circuler de manière régulière et en circuit fermé la solution aqueuse de silicate de soude initialement introduite dans une capacité de taille importante, après neutralisation le mélange retourne dans la capacité. Une telle technique est par exemple décrite dans le brevet français 1 160 762.

La silice de précipitation selon l'invention peut être préparée en mettant en oeuvre un procédé analogue à celui qui vient d'être décrit mais dans lequel après avoir amené le pH du milieu à une valeur comprise entre 9 et 7 par coulée d'acide, on effectue, en conservant approximativement les mêmes conditions de température, un traitement dit de post-addition consistant à ajouter une solution aqueuse de silicate amenant environ 15 à 50 parties de silicate pour 100 parties de silicates mises au départ. La post-addition peut être effectuée instantanément de manière continue, et en plusieurs fois éventuellement, mais il est nécessaire dans tous les cas de maintenir la valeur du pH entre 9 et 7 par coulée supplémentaire d'acide. Durant la post-addition une recirculation analogue à celle précédemment décrite peut être mise en oeuvre.

Le bouchage des micropores étant achevé, la coulée d'acide est poursuivie de manière à amener le pH à une valeur comprise entre 5,5 et 3,5. Durant cette dernière coulée d'acide ou après la fin de celle-ci la température du milieu est élevée jusqu'à une valeur voisine de 100°C. La silice est alors séparée, filtrée, lavée, séchée, micronisée comme dans le précédent procédé. Selon une variante préférentielle on assure durant toutes les coulées d'acide et de silicates une recirculation selon un mode opératoire analogue à celui décrit dans le brevet français 1 160 762. Cette recirculation peut par ailleurs n'être assurée qu'avant la formation du gel. L'addition d'eau après la rupture du gel d'acide polysilicique, et/ou l'addition initiale d'agent sequestrant peuvent être utilisées.

Selon un mode opératoire différent on peut préparer les silices selon l'invention par coulée simultanée de solution acide, et de solution de silicate alcalin. On démarre en général les coulées simultanées sur un fond de silicate dilué et ayant un pH compris entre 10,2 et 8. Préférentiellement un agent sequestrant est introduit dans la solution aqueuse de silicate constituant le pied; le fond représente en général de 15 à 20% du volume total final. L'acide et le silicate sont introduits dans le réacteur à une température comprise entre 80°C et 95°C en maintenant le pH à une valeur comprise entre 9,8 et 10,2. Lorsque tout le silicate est introduit, on effectue un traitement thermique de peptisation en amenant le pH entre 9 et 7 et en chauffant le milieu aux alentours de 100°C. Ce traitement étant achevé (il dure en général au moins 20 minutes), on reprend la coulée d'acide pour amener le pH à une valeur comprise entre 5,5 et 3,5. La silice est alors séparée, lavée séchée et micronisée comme dans les précédents procédés. Selon une variante dudit procédé on peut utiliser la technique de neutralisation avec recirculation du fond de silicate dans le réacteur de neutralisation (technique analogue à celle décrite dans le brevet français 1 160 762).

Selon une variante de l'invention les compositions organosiliciques peuvent contenir à titre d'agent de renforcement des silices de précipitation telles que précédemment définies et ayant subi ultérieurement un traitement usuel de modification de leurs propriétés de surface, en les rendant en particulier hydrophobes. De telles silices modifiées conviennent également bien pour le renforcement des élastomères organopolysiloxaniques. La nature des divers agents destinés à modifier les propriétés de surface n'est pas critique. Les agents utilisés sont généralement de nature organosilicique tels que les silazanes (l'hexaméthyldisilazane), les alcoylsilanes (triméthylsilane), les alcoylalcoxysilanes (triméthyléthoxysilane), les alcoylchlorosilanes, les alcénylchlorosilanes, les organopolysiloxanes dihydroxylés, les cyclosiloxanes et sont par exemple décrits dans les demandes FR—A—2 356 596 et 2 395 952.

Par ailleurs les silices de précipitation peuvent subir un traitement thermique à une température en général comprise entre 200°C et 800°C, un tel traitement réduit la teneur en eau ainsi que la reprise à l'humidité.

Comme toutes les silices de précipitation, les silices utilisées dans le cadre de la présente invention

peuvent contenir une teneur en humidité relative variable selon les conditions de fabrication et/ou de stockage, Cette teneur est en général comprise entre 2 et 6% (mesurée par chauffage durant 2 heures à 105°C). La teneur en eau des silices incorporées dans les compositions organopolysiloxaniques est évidemment fonction de l'application désirée. Pour les compositions extrudables cette teneur doit être inférieure à 3%.

Les compositions organosiliciques selon l'invention contiennent de 5 à 50% et de préférence de 10 à 40% de silices de précipitation éventuellement traitées telles que précédemment définies.

En outre, en plus des polysiloxanes, de la silice précipitée éventuellement traitée, des agents de réticulation et des catalyseurs de réticulation, les compositions peuvent contenir des charges usuelles telles que de quartz pulvérisé, de la terre de diatomées, du talc, du noir de carbone. Les compositions peuvent en outre contenir des adjuvants divers usuels comme des agents antistructures, des stabilisants thermiques, des agents thixotropiques, des pigments, des inhibiteurs de corrosion.

Les agents antistructures, connus également sous la dénomination de plastifiants, sont en général de nature organosilicique et sont introduits à raison de 0 à 20 parties pour 100 parties de gomme organosilicique. Ils permettent d'éviter le durcissement des compositions lors du stockage. Parmi les agents antistructures on peut citer les silanes à groupements hydrolysables, ou des huiles diorganopolysiloxaniques hydroxylées ou alcoxylées de faible poids moléculaire. De telles compositions sont par exemple décrites dans le brevet français 1.111.969.

Parmi les stabilisants thermiques qui sont bien connus de l'homme de l'art on peut citer les sels, les oxydes et les hydroxydes, de fer, de cérium ou de manganèse. Ces additifs qui peuvent être utilisés seuls ou en mélange sont en général introduits à raison de 0,01 à 5% par rapport au poids de la gomme organopolysiloxanique mise en oeuvre.

Les compositions organopolysiloxaniques sont préparées en mélangeant les divers ingrédients de la composition tels que précédemment décrits. Le mélange peut être effectué à température ambiante ou à chaud, qu'il s'agisse de silice traitée ou non en vue de, modifications de ses propriétés de surface.

Après vulcanisation les compositions organopolysiloxaniques selon l'invention conduisent en particulier à des élastomères dont les propriétés mécaniques et thermiques sont du mème ordre que celles des élastomères organopolysiloxaniques renforcées à l'aide de silice de combustion. L'utilisation des compositions organosiliciques selon l'invention pour l'obtention de matériaux durcis, constitue également un objet de la présente invention.

Mais comme déjà dit précédemment les silices selon l'invention peuvent également être mises en oeuvre pour le renforcement des matières élastomères tels que caoutchoucs SBR ou autres.

La présente invention sera plus aisément comprise à l'aide des exemples suivants donnés à titre indicatif mais nullement limitatif.

Exemple 1

La silice de précipitation utilisée dans cet exemple est préparée de la manière suivante:

Dans un récipient violemment agité on introduit 108 kg de solution aqueuse de silicate de soude portée à 76°C (La solution aqueuse de silicaté de soude a une concentration initiale en $SiO_2$ égale à 80 g/l; le rapport r est égal à 3,5). On ajoute dans cette solution 0,33 kg d'une solution aqueuse à 40% de diéthylènetriamino-pentacétate de soude, puis établit à raison de 2 $m^3$/h une recirculation de la solution dans un réacteur agité de petite capacité (5 l) commodément appelé par la suite préréacteur. Tout en maintenant à 76°C la solution, on coule à raison de 130 $cm^3$/minute dans le préréacteur et durant 50 minutes une solution aqueuse sulfurique de densité d=1,22.

La coulée est interrompue après 10 mn lorsque est apparue une opalescence nette. On ajoute alors en 15 minutes et en maintenant la température 62 litres d'eau puis élève la température vers 90°C après la 70ème minute. Cette température est atteinte à la 88ème minute. A partir de cet instant on ajoute dans le préréacteur et jusqu'à la 128ème minute 37 kg de solution aqueuse de silicate de soude à raison de 625 $cm^3$/minute tout en maintenant le pH à 7,5±0,1 par coulée de la solution acide à raison de 63 $cm^3$/minute et tout en maintenant la température entre 85°C et 90°C. La coulée additionnelle de silicate étant terminée à la 128ème minute on poursuit la coulée d'acide jusqu'à amener le pH à 3,5 tout en continuant à chauffer à 90—100°C. La silice est ensuite filtrée, lavée, séchée par séchage flash dans un appareil du type de ceux décrits dans le brevet français 2 257 326 et micronisée dans un appareil du type Jet-O-MIZER et autres décrits dans Chemical Engineers' Handbook-5ème édition 8—43 ou 8—44.

La silice obtenue présente les caractéristiques suivantes:

| | |
|---|---|
| — surface BET | 242 $m^2$/g |
| — surface CTAB | 237 $m^2$/g |
| — rapport surfaces BET/CTAB | 1,021 |
| — teneur en sodium résiduel | 425 ppm |
| — pH | 5,1 |
| — volume spécifique $V_o$ | 4,8 $cm^3$/g |
| — taille des particules (refus au tamis de 45 µm) | <0,05% |
| — humidité à 105°C | 5,90% |
| — perte à 1200°C | 9,22% |

On applique tout d'abord cette silice au renforcement des matières organopolysiloxaniques (EVC).

a) préparation de la composition

On homogéneise 100 parties d'une gomme polydiméthylsiloxanique (renfermant 720 mg de groupement vinyle par kg, cette gomme dévolatilisée est terminée par des motifs triméthylsiloxy et possède à 25°C une viscosité de $20 \times 10^6$ centipoises ($\overline{Mw}=6 \times 10^5$), ajoute 0,4 parties d'un empâtage à 50% d'octoate de fer dans un échantillon de gomme polydiméthylsiloxanique, introduit 6 parties d'agent antistructure (polydiméthylsiloxane α,ω dihydroxylé contenant 8,3% d'hydroxyle), puis 40 parties de la silice de précipitation.

Enfin on introduit dans la composition organopolysiloxanique l'agent de vulcanisation constitué par l partie d'un empâtage à 50% de péroxyde de dichloro-2,4 benzoyle, dans une huile polyorganosiloxanique.

La vulcanisation est ensuite réalisée par chauffage des mélanges disposés dans des moules de 2 mm d'épaisseur durant 8 minutes à 115°C sous presse (60 kg/cm$^2$). Les élastomères subissent éventuellement un traitement de recuit durant 16 heures à 200°C.

Par ailleurs, les compositions organopolysiloxaniques non encore chargées en agent de vulcanisation ont été réalisées à température ambiante ou à 150°C.

b) propriétés des élastomères

Les propriétés mécaniques des élastomères organopolysiloxaniques obtenus après vulcanisation et éventuellement recuisson ont été comparées à celles des élastomères obtenus en remplaçant la silice de précipitation par une silice de combustion ayant sensiblement la même surface ("Cab-O-sil$^R$": surface BET 217 m$^2$/g; surface CTAB 206 m$^2$/g; rapport BET/CTAB=1,053; teneur en sodium résiduel=0 ppm; pH=4,4; volume spécifique $V_o$=4,8 cm$^3$/g; taille des particules estimée par refus au tamis de 45 µm <0,05%).

Les résultats figurent dans les tableaux qui suivent:

Melanges vulcanises et non recuits

| | Composition organopoly-siloxanique mélangée à 25°C | | Composition organopoly-siloxanique mélangée 1h 30 mn à 150°C | |
|---|---|---|---|---|
| | silice de précipitation de l'invention | silice Cab-O-Sil$^R$ | silice de précipitation de l'invention | silice Cab-O-Sil$^R$ |
| dureté shore A | 61 | 55 | 49 | 46 |
| module M Pa (100%) | 1,98 | 1,45 | 2,05 | 1,66 |
| Résistance à la rupture M Pa | 7,6 | 7,6 | 8,0 | 7,1 |
| allongement à la rupture % | 430 | 449 | 428 | 385 |
| résistance à la déchirure kg/cm | 18 | 15 | 15 | 11 |
| résilience Zwick % | 39 | 42 | 46 | 41 |
| déformation remanente à la compression % (70h à 150°C/30%) | 78 | 75 | 62 | 59 |

Melanges vulcanises et recuits 16 h à 200°C

| | Composition organopolysiloxanique mélangée à 25°C | | Composition organopolysiloxanique mélangée 1h 30 mn à 150°C | |
|---|---|---|---|---|
| | silice de précipitation de l'invention | silice Cab-O-Sil[R] | silice de précipitation de l'invention | silice Cab-O-Sil[R] |
| dureté shore A | 74 | 69 | 58 | 55 |
| module M Pa (100%) | 3,0 | 2,25 | 2,69 | 2,2 |
| Résistance à la rupture M Pa | 7,3 | 8,0 | 8,6 | 8,3 |
| allongement à la rupture % | 302 | 316 | 330 | 358 |
| résistance à la déchirure kg/cm | 14 | 15 | 11 | 12 |
| résilience Zwick % | 46 | 48 | 54 | 49 |
| déformation remanente à la compression % (70h à 150°C/30%) | 21 | 23 | 15 | 17 |

On applique ensuite cette silice sans micronisation au renforcement des élastomères. Le $V_{600}$ de cette silice est trouvé égal à 1,23 et avec séchage préalable à 190°C à 1,49. Dans cet exemple on met en oeuvre la formule suivant: (en parties en poids).

| | |
|---|---|
| Copolymère butadiène styrène étendu aux huiles (SBR 1712) | 100,00 |
| Huile aromatique (DUTREX V10) | 20,00 |
| Acide stéarique | 1,50 |
| Soufre | 2,80 |
| N-isopropyl-N-phényl-para-phénylène diamine (antioxygène Permanax IPPD) | 1,50 |
| Phénylène diamine (antioxygène Permanax 6PPD) | 1,50 |
| N-cyclohexyl-2-Benzothiozyl sulfenamide (Vulcafor CBS) | 3,00 |
| Gamma-mercaptopropyle-trimethoxysilane (A 189) | 2,50 |
| Silice | 60,00 |
| Polyéthylène glycol (PEG 4000) | Voir tableaux |

La mise en oeuvre est réalisée dans un malaxeur interne Banbury de 1 litre, puis repris dans un malaxeur à cylindre.

Les tests suivants ont été faits:

Tests mecaniques, statiques et dynamiques

1.)—Rhéomètre MONSANTO (ASTM D 2084)

Mesure les propriétés rhéologiques du mélange durant la vulcanisation.

— Couple minimal (Cm): consistance du mélange non vulcanisé (mélange "cru") à la température de l'essai.

— Couple maximal (CM): consistance du mélange après réticulation.
— Δ Couple: CM—Cm est en relation avec le taux de réticulation.
— Précocité: temps nécessaire pour démarrer la réticulation à la température de l'essai.
— Indice: en relation avec la vitesse de vulcanisation (temps optimum—Précocité).

— Temps optimum: $X=\frac{(CM-Cm)\times 90}{100}+Cm$

Couple X ——→ Y minutes
(ordonnée) (abscisse)

Y mn=Temps optimum

Ces propriétés sont en particulier décrites dans l'Encyclopedia of Polymer Science and Technology volume 12 page 265 (Interscience Publishers—John Wiley & Sons, Inc).

2.)—Propriétés statiques
Sont celles qui sont mesurées selon les normes:

a)—ASTM D 412—51 T
Résistance rupture M Pa
Allongement %
Module M Pa

b)—ASTM D 2240—75
Dureté Shore A

c)—DIN 53516
Abrasion (résistance à 1')

3.)—Propriétés dynamiques
ASTM D 623—67
Flexomètre Goodrich

Cet appareil permet de soumettre un vulcanisat à des déformations alternées et de déterminer sa tenue à la fatigue.
a)—Compression statique (CS%): Déflexion sous charge constante.
b)—Déformation permanente (DP%): Pourcentage de déformation résiduaire après essai.
c)—Compression dynamique (CD%): % de déformation durant l'essai.
CDO: Compression dynamique en début d'essai.
CDF: Compression dynamique en fin d'essai.
Δ CD=CDF—CDO évolution de la compression dynamique (est en relation avec la tenue à la fatigue).
d)—ΔT. base: ΔT. entre la température à la surface de l'éprouvette (à sa base) et la température de la chambre.
e—ΔT. coeur: ΔT. entre la température au coeur de l'éprouvette et la température de la chambre.
f—Conditions des essais:
Charge 24 lbs, déflexion 22,2%, fréquence 21, 4Hz
Température de la chambre=50°C.
Les résultats sont résumés dans le tableau ci-après.

| | 5% PEG sur silice | | 7% PEG sur silice | |
|---|---|---|---|---|
| Silice | 60 | | 60 | |
| Surface BET | 247 | | 247 | |
| Surface CTAB | 226 | | 226 | |
| Microporosite | 21 | | 21 | |
| PEG 4000 (% sur silice) | 5 | | 7 | |
| Rheometre à 150°C | | | | |
| Couples: Mini-Maxi | 8,5—8,45 | | 12—89 | |
| Δ Couples | 76 | | 77 | |
| Precocite-Indice | 6mn 30s—10 mn | | 5 mn—9 mn | |
| Optimum | 17 mn | | 14 mn | |
| Proprietes Statiques | | Ecart type | | Ecart type |
| Resistance Rupture M Pa | 19,4 | 0,5 | 19,16 | 0,82 |
| Durete Shore A | 66 | — | 67 | — |
| Module A 100% A11. M Pa | 1,2 | 0,12 | 1,3 | 0,1 |
| Module A 200% A11. M Pa | 6,6 | 0,4 | 7,1 | 0,5 |
| Allongement % | 534 | 18 | 535 | 25,5 |
| Dechirement kg/cm Pantalon | 28,6 | 10 | 37,0 | 8,5 |
| Abrasion DIN (perte) | 148 | — | 153 | — |
| Flexion de Mattia | | | | |
| kg/cycles avec entaille | 16 | | 19 | |
| kg/cycles sans entaille | 120 | | 150 | |
| (ASTM: D 813—57 T) | | | | |
| Flexometrie Goodrich | | | | |
| C=24 lbs—D=22,2% | | | | |
| F=21,4 Hz θ=50°C | | | | |
| Compression Statique % | 11,4 | | 10,95 | |
| Comp. Dynamique % Origine | 4,4 | | 3,9 | |
| Comp. Dynamique % Fin | 5,4 | | 4,8 | |
| Δ CDF—CDO | 1,0 | | 0,9 | |
| Δ T. base | 29,0 | | 28,0 | |
| Δ T. coeur | 102 | | 99,0 | |
| Deformation Permanente % (DP) | 3,0 | | 2,55 | |

On note en particulier une amélioration spectaculaire de la résistance à la flexion sans entaille (de Mattia) de l'ordre de 3 à 4 fois celle obtenue dans les mêmes conditions avec une silice non conforme à l'invention de pH de l'ordre de 7, ainsi qu'une valeur élevée de la résistance au déchirement ce qui est particulièrement interessant dans nombre d'applications, notamment le pneumatique.

On fait des coupes de vulcanisation chargé de silice, de quelques microns de côté, puis on colore préférentiellement la silice par le rouge de méthyle afin de visualiser la silice par microscopie optique, la silice présentant au départ le même indice de réfraction que l'élastomère.

Le pourcentage de dispersion est le pourcentage de silice dispersée en conglomérats de moins de 8 microns.

On le calcule comme suit:

$$\% \text{ dispersion}—100=\frac{SX}{L}$$

X—Le nombre total de carrés de 17 microns dans le réticule de 10 000 carrés,
S—Facteur de gonflement de surface dû à l'action de l'agent gonflant.

$$\text{soit } s=\frac{\text{surface de la coupe après gonflement}}{\text{surface de la coupe avant gonflement}}$$

L=Pourcentage en volume de la silice par rapport au caoutchouc dans son ensemble,

Poids de la silice×volume spécifique de la silice×100=poids du mélange×volume spécifique du mélange.

Suivant le même principe, en faisant varier les grossissements du microscope optique, nous pouvons donner le % de silice dispersée en conglomérats de moins de 3 µm et de moins de 0,7 µm, chaque carré du réticule ayant une dimension linéaire de 6 et 1,4 µm aux différents grossissements.

La dispersion est d'autant meilleure que ce pourcentage est plus élevé.

Les résultats en dispersion sont les suivants:

| Dispersion | |
|---|---|
| <8 µm | 99,5 |
| <3 µm | 98 |
| <0,7 µm | 94 |

Exemple 2

Préparation de la silice de précipitation utilisée à l'exemple 2

Dans un réacteur fortement agité on ajoute 30 l d'eau et 0,5 l d'une solution aqueuse à 40% de diéthylènetriaminopentacétate de soude puis commence l'addition de la solution aqueuse de silicate de soude (concentration en $SiO_2$ de 80 g/l; le rapport r égal à 3,5) à raison de l 250 $cm^3$/minute en maintenant la température entre 80 et 100°C jusqu'à amener le pH à une valeur de 10. On poursuit la coulée du silicate et commence simultanément la coulée de l'acide (acide sulfurique à 92,5 g/l) à raison de 310 $cm^3$/minute. A la 100ème minute on arrête la coulée de silicate et poursuit l'addition d'acide jusqu'à pH égal à 8 puis chauffe à 95°C pendant 20 minutes. La coulée d'acide est alors reprise pour amener le pH à une valeur de 3,5. La silice est ensuite filtrée, lavée, séchée, broyée, micronisée comme dans le précédent exemple.

On obtient une silice de caractéristiques suivantes:

| | |
|---|---|
| — surface BET | 206 $m^2$/g |
| — surface CTAB | 194 $m^2$/g |
| — rapport surfaces BET/CTAB | 1,062 |
| — teneur en sodium résiduel | 150 ppm |
| — pH | 5,1 |
| — volume spécifique $V_o$ | 5 $cm^3$/g |

On mélange à température ambiante sur malaxeurs à rouleaux 100 parties de gomme siloxanique de l'exemple 1, 4 parties d'antistructure de l'exemple 1 et ajoute 35 parties de la silice de précipitation.

Les conditions de vulcanisation et recuisson sont identiques à celles de l'exemple 1.

Les résultats figurent dans le tableau suivant:

Melanges vulcanises et recuits 16 h à 200°C

| | Composition organopoly-siloxanique mélangée à 25°C | | Composition organopoly-siloxanique mélangée 1h 30 mn à 150°C | |
|---|---|---|---|---|
| | silice de précipitation de l'invention | silice Cab-O-Sil[R] | silice de précipitation de l'invention | silice Cab-O-Sil[R] |
| dureté shore A | 58 | 60 | | |
| module M Pa (100%) | 2,09 | 2,03 | | |
| Résistance à la rupture M Pa | 7,9 | 8,0 | | |
| allongement à la rupture % | 360 | 350 | | |
| resistance à la déchirure kg/cm | 10 | 11 | | |
| résilience Zwick % | 45 | 43 | | |
| déformation remanente à la compression % (70 h à 150°C/30%) | 12 | 15 | | |

Exemple 3

Procédé de préparation de la silice utilisée à l'exemple 3

Dans un réacteur violemment agité on introduit 13,2 l de solution aqueuse de silicate de soude porté à 90°C (la solution aqueuse de silicate de soude a une concentration initiale en $SiO_2$ égale à 55 g/l; le rapport r est égal à 3,5).

On ajoute dans cette solution 2 g de complexant (nitrilotriacétate de soude) puis ajoute progressivement une solution aqueuse d'acide sulfurique à 30% à raison de 13,3 $cm^3$/minute. La coulée est interrompue à la 20ème minute alors qu'est apparue l'opalescence.

La coulée d'acide est reprise à la 47ème minute puis poursuivie jusqu'à la 82ème minute alors que le pH est devenu égal à 7,5. On ajoute ensuite et à raison de 80,2 $cm^3$/minute une nouvelle quantité de silicate de soude à concentration identique et ceci jusqu'à la 122ème minute tout en maintenant la température et la valeur du pH entre 7,5±0,2 par coulée de la solution aqueuse d'acide. Après la fin de la coulée de la solution de silicate, la coulée de la solution aqueuse acide est poursuivie jusqu'à ce que le pH soit amené à une valeur de 3,5. La silice est ensuite filtrée, lavée, séchée, broyée, micronisée comme dans les exemples précédents.

On obtient une silice de caractéristiques suivantes:

| | |
|---|---|
| — surface BET | 240 $m^2/g$ |
| — surface CTAB | 224 $m^2/g$ |
| — rapport des surfaces BET/CTAB | 1,071 |
| — teneur en sodium résiduel | 300 ppm |
| — volume spécifique $V_o$ | 4,2 $cm^3/g$ |
| — taille des particules (refus au tamis 45 μ) | <0,05% |
| — humidité à 105°C | 6,3% |

On prépare une composition organopolysiloxanique en substituant dans la formule de la composition organopolysiloxanique de l'exemple 2 la silice de précipitation par la silice de précipitation.

Les conditions de vulcanisation sont identiques à celles de l'exemple 1.

Les résultats figurent dans le tableau suivant:

Melanges vulcanises et recuits 16 h à 200°C

| | Composition organopolysiloxanique mélangée à 25°C | |
|---|---|---|
| | silice de précipitation de l'invention | silice Cab-O-Sil[R] |
| Dureté Shore A | 65 | 60 |
| Module M Pa (100%) | 2,2 | 2,03 |
| Résistance à la rupture M Pa | 7,8 | 8,0 |
| Allongement à la rupture % | 320 | 350 |
| Résistance à la déchirure kg/cm | 11 | 11 |
| Résilience Zwick % | 40 | 43 |
| Déformation rémanente à la compression % (70 h à 150°C/30%) | 11 | 15 |

**Revendications**

1. Nouvelle silice de précipitation, utilisable en tant que pigment ou charge, caractérisée par le fait qu'elle présente les caractéristiques suivantes:

— surface BET: 190—340 $m^2/g$
— surface CTAB: 180—280 $m^2/g$

— rapport $\frac{\text{Surface BET}}{\text{Surface CTAB}}$=0,9 à 1,2

— teneur en sodium résiduel <500 ppm
— Vo ≥4,2 $cm^3/g$
— pH: 3,5—6

2. Nouvelle silice de précipitation selon la revendication 1, caractérisée par le fait qu'elle présente une taille des particules estimée par refus au tamis de 45 µm <0,05%.

3. Nouvelle silice selon la revendication 2, caractérisée par le fait qu'elle présente les caractéristiques suivantes:

— surface BET 200—250 $m^2/g$
— surface CTAB 190—240 $m^2/g$
— rapport surface BET/CTAB 0,9 à 1,2
— Teneur en sodium résiduel <500 ppm
— pH 4,5 à 5,5
— Volume spécifique Vo ≥4,2 $cm^3/g$
— Taille des particules estimée par refus au tamis de 45 µm <0,05%

4. Application d'une silice selon l'une des revendications 1 à 3 au renforcement des élastomères.

## Patentansprüche

1. Neue Fällungskieselsäure, verwendbar als Pigment oder Füllstoff, gekennzeichnet dadurch, daß sie folgende Merkmale aufweist:

| | |
|---|---|
| Oberfläche BET: | 190 bis 340 $m^2/g$ |
| Oberfläche CTAB: | 180 bis 280 $m^2/g$ |

$$\text{Verhältnis } \frac{\text{Oberfläche BET}}{\text{Oberfläche CTAB}} = 0{,}9 \text{ bis } 1{,}2$$

| | |
|---|---|
| Restgehalt an Na | <500 ppm |
| Vo | ≥4,2 $cm^3/g$ |
| pH: | 3,5 bis 6 |

2. Neue Fällungskieselsäure nach Anspruch 1, dadurch gekennzeichnet, daß sie eine solche Teilchengröße aufweist, daß <0,05% auf einem Sieb von 45 µm zurückgehalten werden.

3. Neue Kieselsäure nach Anspruch 2, dadurch gekennzeichnet, daß sie folgende Merkmale aufweist:

| | |
|---|---|
| Oberfläche BET: | 200 bis 250 $m^2/g$ |
| Oberfläche CTAB: | 190 bis 240 $m^2/g$ |
| Verhältnis der Oberflächen BET/CTAB: | 0,9 bis 1,2 |
| Restgehalt an Na | <500 ppm |
| pH: | 4,5 bis 5,5 |
| Spezifisches Volumen Vo | ≥4,2 $cm^3/g$ |

Teilchengröße: <0,05% werden auf einem Sieb von 45 µm zurückgehalten.

4. Anwendung einer Kieselsäure nach einem der Ansprüche 1 bis 3 zum Verstärken von Elastomeren.

## Claims

1. A novel precipitation silica which can be used as a pigment or a filler characterised in that it has the following characteristics:

| | |
|---|---|
| — BET surface area: | 190—340 $m^2/g$ |
| — CTAB surface area: | 180—280 $m^2/g$ |

$$\text{— ratio } \frac{\text{BET surface area}}{\text{CTAB surface area}} = 0.9 \text{ to } 1.2$$

| | |
|---|---|
| — residual sodium content | <500 ppm |
| — Vo | ≥4.2 $cm^3/g$ |
| — pH-value: | 3.5—6. |

2. A novel precipitation silica according to claim 1 characterised in that it has a particle size as estimated by refusal at a 45 µm sieve <0.05%.

3. A novel silica according to claim 2 characterised in that it has the following characteristics:

| | |
|---|---|
| — BET surface area: | 200—250 $m^2/g$ |
| — CTAB surface area: | 190—240 $m^2/g$ |
| — BET/CTAB surface area ratio: | 0.9 to 1.2 |
| — residual sodium content | <500 ppm |
| — pH-value | 4.5 to 5.5 |
| — specific volume Vo | ≥4.2 $cm^3/g$ |
| — size of particles estimated by refusal at a 45 µm sieve | <0.05%. |

4. Use of a silica according to one of claims 1 to 3 for reinforcing elastomers.